# FASCICULE DE BREVET EUROPEEN

(11) **EP 3 283 742 B1**
(45) Date de publication et mention de la délivrance du brevet: **20.03.2019**
(21) Numéro de dépôt: 16717315.2
(22) Date de dépôt: 12.04.2016
(51) Int. Cl.: F02B 37/02, F02B 37/10, F02B 37/16

(54) **DISPOSITIF INTÉGRÉ À UNE CULASSE POUR LE CONTRÔLE D'UNE QUANTITÉ D'AIR INTRODUIT À L'ADMISSION D'UN MOTEUR À COMBUSTION INTERNE SURALIMENTÉ ET PROCÉDÉ UTILISANT UN TEL DISPOSITIF**
IN DEN ZYLINDERKOPF INTEGRIERTE VORRICHTUNG ZUR REGELUNG DER IN DAS EINLASSSYSTEM EINER AUFGELADENEN BRENNKRAFTMASCHINE EINGEBRACHTEN LUFTMENGE SOWIE ZUGEHÖRIGES VERFAHREN
DEVICE INTEGRATED INTO CYLINDER HEAD FOR CONTROLLING THE AMOUNT OF AIR INTRODUCED INTO THE AIR INTAKE SYSTEM OF A SUPERCHARGED INTERNAL COMBUSTION ENGINE AND METHOD USING SUCH DEVICE

(30) Priorité: 16.04.2015 FR 1553400
(43) Date de publication de la demande: 21.02.2018
(73) Titulaire: IFP Energies nouvelles, 92500 Rueil-Malmaison (FR)
(72) Inventeur: COLLIOU, Thierry, 38138 Les Cotes d'Arey (FR); WALTER, Bruno, 69700 Chassagny (FR)
(74) Mandataire: IFP Energies nouvelles
(86) Numéro de dépôt international: PCT/EP2016/057981
(87) Numéro de publication internationale: WO 2016/166087

(56) Documents cités:
- EP-A1- 0 701 048
- DE-A1- 1 526 443
- DE-A1- 2 438 162
- DE-A1- 2 750 537
- DE-A1- 2 906 182
- DE-A1- 3 311 626
- DE-C1- 19 531 875
- GB-A- 2 438 360
- JP-A- S57 200 618

## Description

La présente invention se rapporte à un dispositif de contrôle de la quantité d'air introduit à l'admission d'un moteur à combustion interne suralimenté, notamment d'un moteur stationnaire ou pour un véhicule automobile ou industriel, et à un procédé de contrôle de la quantité d'air pour un tel moteur. En particulier, la plupart des éléments du dispositif, et notamment les différents conduits, sont disposés intégrés à la culasse du moteur.

Comme cela est largement connu, la puissance délivrée par un moteur à combustion interne est dépendante de la quantité d'air introduite dans la chambre de combustion de ce moteur, quantité d'air qui est elle-même proportionnelle à la densité de cet air.

Ainsi, il est habituel d'augmenter cette quantité d'air au moyen d'une compression de l'air extérieur avant qu'il ne soit admis dans cette chambre de combustion. Cette opération, appelée suralimentation, peut être réalisée par tous moyens, tel qu'un turbocompresseur ou un compresseur entraîné, qui peut être centrifuge ou volumétrique.

Dans le cas d'une suralimentation par un turbocompresseur, ce dernier comprend une turbine rotative, à simple flux ou à double flux, reliée par un axe à un compresseur rotatif. Les gaz d'échappement issus du moteur traversent la turbine qui est alors entrainée en rotation. Cette rotation est ensuite transmise au compresseur qui, de par sa rotation, comprime l'air extérieur avant qu'il ne soit introduit dans la chambre de combustion.

Comme cela est mieux décrit dans la demande de brevet français N° 2 478 736, il est prévu, pour pouvoir amplifier de manière significative cette quantité d'air comprimé dans la chambre de combustion du moteur, d'augmenter encore plus la compression de l'air extérieur par le compresseur.

Cela se réalise plus particulièrement en augmentant la vitesse de rotation de la turbine et donc du compresseur.

Pour cela, une partie de l'air comprimé sortant du compresseur est déviée pour être admis directement à l'entrée de la turbine en se mélangeant avec les gaz d'échappement. Cette turbine est alors traversée par une plus grande quantité de fluide (mélange d'air comprimé et de gaz d'échappement), ce qui permet d'augmenter la vitesse de rotation de la turbine et par conséquence du compresseur. Cette augmentation de vitesse du compresseur permet ainsi d'augmenter la pression de l'air extérieur qui sera comprimé dans ce compresseur puis introduit dans la chambre de combustion du moteur.

Par cela, l'air comprimé a une densité plus élevée ce qui permet d'accroitre la quantité d'air contenue dans la chambre de combustion.

Le document DE2906182 montre un moteur à combustion interne disposant d'un turbocompresseur et un conduit de transfert partiel afin d'acheminer une partie de l'air comprimé, en aval du compresseur, vers l'amont de la turbine.

Le document EP0701048A1 divulgue une culasse comprenant des conduits intégrés pour la recirculation des gaz d'échappement.

Ce type de moteur suralimenté, comme décrit ci-dessus, bien que donnant satisfaction, présente néanmoins des inconvénients non négligeables.

En effet, le débit de l'air comprimé qui est admis à l'entrée de la turbine n'est pas correctement contrôlé, ce qui peut entrainer un dysfonctionnent du moteur.

Ainsi, à titre d'exemple, en cas de trop grande quantité d'air comprimé déviée à l'entrée de la turbine, les gaz d'échappement entrant dans la turbine sont refroidis de manière trop importante par cet air et amène une diminution du rendement global de la suralimentation.

La présente invention se propose de remédier aux inconvénients mentionnés ci-dessus grâce à un dispositif de contrôle de la quantité d'air introduit à l'admission d'un moteur à combustion interne suralimenté qui permet de répondre à toutes les demandes de puissance du moteur. De plus, le mode de réalisation de la présente invention se limite à des modifications de la culasse du moteur, ce qui minimise son impact dans l'environnement du moteur. La boucle d'air comprimé conventionnelle n'est pas modifiée.

L'invention ici présentée permet également de réaliser un transfert de l'air comprimé de l'admission vers l'échappement même quand la pression moyenne de l'air comprimé à l'admission est inférieure à celle des gaz à l'échappement. Il suffit uniquement qu'il existe des phases durant le cycle de fonctionnement du moteur où la pression à l'admission est supérieure à celle existant à l'échappement.

A cet effet, la présente invention concerne un dispositif de contrôle de la quantité d'air introduit à l'admission d'un moteur à combustion interne suralimenté, ledit moteur comprenant deux sorties de gaz d'échappement reliées chacune à un collecteur d'échappement d'un groupe d'au moins un cylindre, ledit dispositif comprenant un dispositif de suralimentation comportant un turbocompresseur avec une turbine à double entrée connectée auxdites sorties de gaz d'échappement ainsi qu'un compresseur d'air extérieur, et au moins un conduit de transfert partiel de l'air comprimé du compresseur vers les entrées de la turbine, caractérisé en ce que le conduit transfert partiel est aménagé dans la culasse de la motorisation entre une admission et un échappement relié aux entrées de la turbine et comporte des moyens de vannage contrôlant la circulation de l'air comprimé transféré.

Le conduit de transfert partiel peut comporter un clapet antiretour.

Le dispositif peut comporter au moins deux conduits de transfert partiel intégrés à la culasse et reliés à deux sorties d'échappement de ladite culasse en communication avec les deux entrées de la turbine.

Le conduit de transfert partiel peut relier l'admission et l'échappement d'un même cylindre.

Le conduit de transfert partiel peut relier l'admission d'un cylindre et l'échappement d'un autre cylindre.

Les moyens de vannage peuvent comprendre des vannes proportionnelles.

Le dispositif peut comporter des moyens de commande des vannes proportionnelles.

L'invention concerne également un procédé de contrôle de la quantité d'air comprimé à l'admission d'un moteur à combustion interne suralimenté, ledit moteur comprenant deux sorties de gaz d'échappement reliées chacune à un collecteur d'échappement d'un groupe d'au moins un cylindre, ledit dispositif comprenant un dispositif de suralimentation avec un turbocompresseur avec une turbine à double entrée connectée auxdites sorties de gaz d'échappement ainsi qu'un compresseur d'air extérieur, et au moins un conduit de transfert partiel de l'air comprimé du compresseur vers les entrées de la turbine, caractérisé en ce qu'il consiste à aménager ledit conduit dans la culasse de la motorisation entre une admission et un échappement relié aux entrées de la turbine et à introduire par ledit conduit une partie de l'air comprimé sortant du compresseur dans les entrées de gaz d'échappement de la turbine en contrôlant la circulation de l'air comprimé transféré par des moyens de vannage.

Le procédé peut consister à aménager au moins deux conduits de transfert dans la culasse et à contrôler la circulation de l'air comprimé dans chacun des conduits par des moyens de vannage.

Les autres caractéristiques et avantages de l'invention vont apparaître à la lecture de la description qui va suivre, donnée à titre uniquement illustratif et non limitatif, et à laquelle sont est annexées :
- la figure 1 qui illustre un moteur à combustion interne avec une représentation schématique du principe du dispositif de suralimentation selon l'invention ;
- la figure 2 qui montre plus précisément un mode de réalisation du moteur à combustion interne avec son dispositif de suralimentation comprenant un conduit de transfert incorporé à la culasse, selon l'invention.

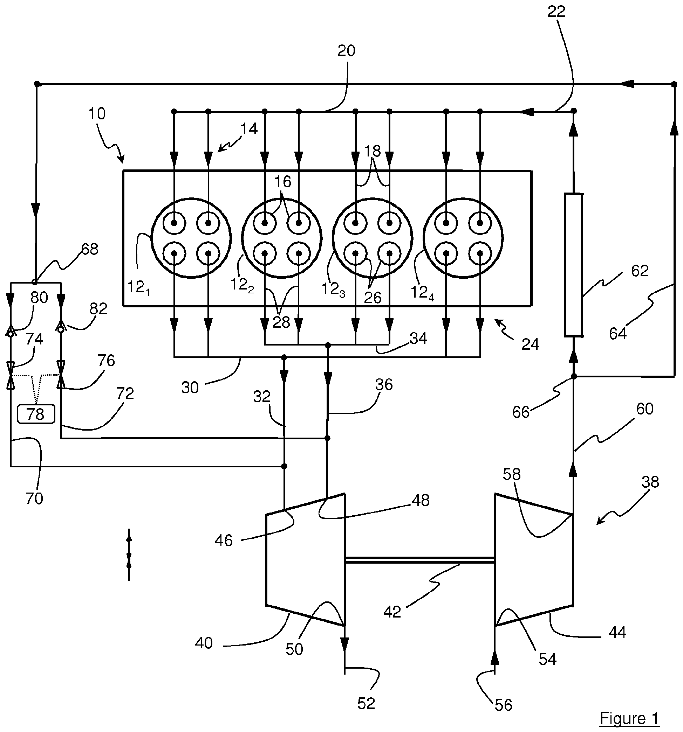

Sur la figure 1, le moteur à combustion interne 10 comprend au moins deux cylindres, ici quatre cylindres référencés 12₁ à 12₄ à partir de la gauche de la figure.

De manière préférentielle, ce moteur est un moteur à combustion interne à injection directe, notamment de type Diesel, mais cela n'écarte en aucune manière tout autre type de moteur à combustion interne.

Chaque cylindre comprend des moyens d'admission 14 avec au moins une soupape d'admission 16, ici deux soupapes d'admission contrôlant chacune une tubulure d'admission 18. Les tubulures d'admission 18 aboutissent à un collecteur d'admission 20 alimenté par un conduit d'alimentation 22 en air d'admission, tel que de l'air comprimé.

Ce cylindre comprend aussi des moyens d'échappement des gaz brûlés 24 avec au moins une soupape d'échappement 26, ici également deux soupapes contrôlant chacune une tubulure d'échappement 28.

Dans l'exemple illustré le moteur est prévu pour fonctionner selon un ordre de combustion dénommé 1-3-4-2. Compte tenu de cet ordre de combustion, les tubulures d'échappement du premier cylindre 12₁ et deuxième cylindre 12₄, qui forment un premier groupe d'au moins un cylindre, sont connectées à un premier collecteur d'échappement 30 avec une première sortie de gaz d'échappement 32. Les tubulures d'échappement du troisième et quatrième 12₂ et 12₃, qui forment un deuxième groupe d'au moins un cylindre, sont connectées à un deuxième collecteur d'échappement 34 qui comporte une deuxième sortie de gaz d'échappement 36.

Les deux sorties de gaz d'échappement aboutissent à un turbocompresseur 38 pour la compression de l'air et plus particulièrement à la turbine de détente 40 de ce turbocompresseur.

Comme illustré sur la figure 1, le turbocompresseur est un turbocompresseur à double entrée, plus connu sous le vocable de turbocompresseur "Twin Scroll".

Ce type de turbocompresseur comprend la turbine de détente 40 balayée par les gaz d'échappement et qui est reliée en rotation par un arbre 42 avec un compresseur 44.

Au niveau de la turbine, l'entrée des gaz d'échappement est divisée en deux sections, une première section d'entrée 46 raccordée à la première sortie de gaz d'échappement 32 du premier collecteur 30 et une deuxième section d'entrée 48 raccordée à la deuxième sortie de gaz d'échappement 36 du deuxième collecteur d'échappement 34.

L'évacuation de gaz 50 de la turbine 40 est raccordée conventionnellement à la ligne d'échappement 52 du moteur.

Le compresseur 44 du turbocompresseur 38 comporte une admission d'air extérieur 54 alimentée par une conduite d'alimentation 56. La sortie d'air comprimé 58 de ce compresseur est reliée au conduit d'alimentation 22 du collecteur d'admission 20 par une conduite 60.

Avantageusement, il peut être prévu de placer un radiateur de refroidissement de l'air comprimé 62 sur la conduite 60, entre le compresseur et la conduite 22.

Comme mieux visible sur la figure 1, un conduit de transfert 64 permet de faire circuler une partie de l'air comprimé sortant du compresseur 44 vers les entrées 46 et 48 de la turbine.

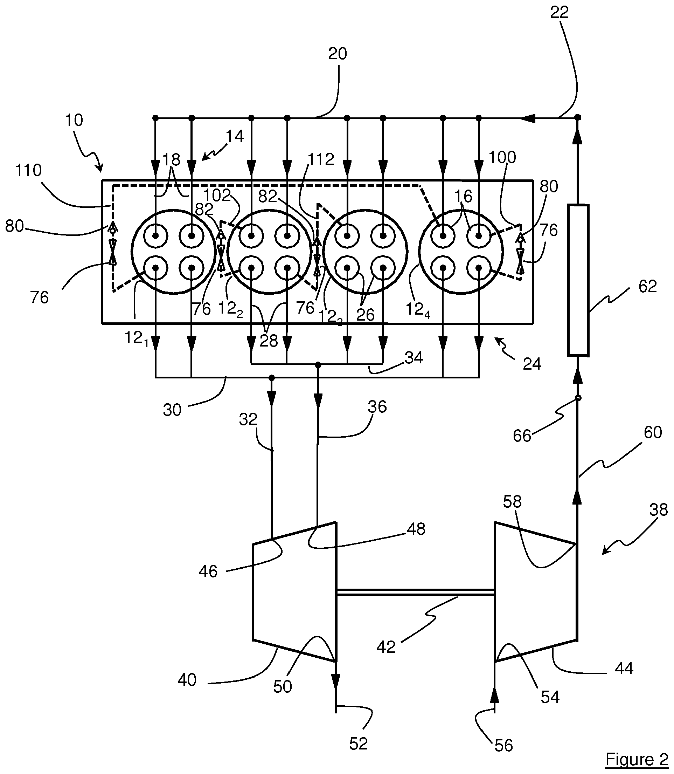

Cette configuration représentée sur la figure 1 permet de mieux comprendre le principe de l'invention en décrivant clairement les différents circuits d'air comprimé, cependant la présente invention est réalisée selon la figure 2 où les conduits de balayage sont disposés dans la culasse du moteur.

Selon la figure 1, le conduit de transfert partiel prend naissance sur la conduite 60, à un point de d'intersection 66 entre le compresseur et le radiateur de refroidissement 62, et se sépare ensuite, à partir d'un point de bifurcation 68, en deux branches 70 et 72. La branche 70 aboutit à l'entrée 46 de la turbine par sa jonction avec la première sortie de gaz d'échappement 32 et la branche 72 aboutit à l'autre entrée 48 de cette turbine par sa jonction avec la sortie de gaz d'échappement 36.

Chaque branche porte des moyens de vannage 74 et 76, comme une vanne proportionnelle, commandés par un moyen de commande 78, qui peut être commun aux deux moyens de vannage. Cette vanne permet ainsi de contrôler la circulation de l'air comprimé qui circule dans la branche.

Avantageusement, chaque branche comporte également un clapet anti-retour 80 et 82 qui interdit la circulation de l'air comprimé de la branche vers le compresseur tout en empêchant la mise en communication des deux branches.

Cette configuration permet ainsi, pendant le fonctionnement du moteur, de profiter des zones de basse pression échappement régnant ponctuellement dans les collecteurs d'échappement pour introduire de l'air comprimé dans la turbine et augmenter ainsi le débit de cette turbine et par conséquent du compresseur. Cela permet également d'avoir une suralimentation plus efficace pour les bas régimes.

Durant le fonctionnement, en cas de besoin d'air en grande quantité dans les cylindres, les vannes 74 et 76 sont commandées en ouverture pour introduire de l'air comprimé provenant du compresseur 44 dans la turbine 40.

L'air comprimé sortant du compresseur 44 circule dans le conduit 64 puis dans les branches 70 et 72 pour aboutir aux entrées de gaz d'échappement 46 et 48 de la turbine 40 en y apportant un surplus de fluide à cette turbine.

Ainsi, la turbine est parcourue non seulement par les gaz d'échappement venant des sorties 32 et 36, mais également par de l'air comprimé qui vient s'ajouter à ces gaz. De ce fait, la rotation de la turbine est augmentée, ce qui entraine une augmentation de rotation du compresseur et, en conséquence, une augmentation de la pression de l'air comprimée qui sort de ce compresseur.

Bien entendu, les vannes 74 et 76 sont contrôlées par le moyen de commande 78 de façon à admettre la quantité d'air comprimé dans la turbine qui répond aux besoins de suralimentation du moteur.

La figure 2 décrit en exemple un mode de réalisation selon l'invention. Ici, la boucle d'air comprimé à l'admission du moteur n'est pas modifiée entre la sortie du compresseur 38 et les tubulures d'admission 18. Egalement, la boucle d'échappement, et notamment la partie qui alimente la turbine 40, n'est pas modifiée.

La réalisation de la présente invention porte sur l'incorporation de conduits de transfert partiel d'air comprimé, intégrés dans le corps de la culasse de la motorisation.

Ainsi, au niveau du piston 12₄, un conduit de transfert partiel 100 relie le conduit de la culasse auquel la tubulure d'admission aboutie, au conduit d'échappement au niveau de la culasse. Sur ce conduit de transfert partiel, on dispose une vanne 74 de contrôle du débit d'air et un clapet anti-retour 80 pour éviter le reflux des gaz d'échappement dans l'admission. Ce clapet peut être disposé en amont ou aval de la vanne, ou même être intégré à la vanne 76.

Cette disposition permet introduire de l'air comprimé provenant du compresseur 44 dans l'entré 46 la turbine 40 au travers du cylindre 12₄.

Avantageusement, il peut être prévu au niveau du piston 12₂ un autre conduit de transfert partiel 102 qui relie le conduit de la culasse auquel la tubulure d'admission aboutie, au conduit d'échappement. Sur cet autre conduit de transfert partiel, on dispose une vanne 76 de contrôle du débit d'air et un clapet anti-retour 82 pour éviter le reflux des gaz d'échappement dans l'admission.

Cette disposition permet introduire de l'air comprimé provenant du compresseur 44 dans l'entré 48 la turbine 40 au travers du cylindre 12₁.

Dans une variante, à partir du piston 12₃, un autre conduit de transfert partiel 110 relie une admission au conduit d'échappement du piston 12₂. Ainsi, le transfert partiel d'air comprimé aboutit dans la tubulure d'échappement 34 qui alimente, l'entrée 48 de la turbine 40. De même que le conduit de transfert 100, le conduit 112, est équipé de vanne de contrôle du débit 76 et de clapet anti-retour 82.

Egalement, il peut être prévu au niveau du piston 12₄, un autre conduit de transfert partiel 112 qui relie une admission au conduit d'échappement du piston 12₁. Cet autre conduit est équipe d'une vanne 76 et d'un clapet anti-retour 82. Dans ce cas, le transfert partiel d'air comprimé aboutit dans la tubulure d'échappement 30 qui alimente, l'entrée 46 de la turbine 40.

Comme cela a été décrit à propos de la figure 1, des moyens de commande sont connectés à l'ensemble des vannes de contrôle de façon à pouvoir synchroniser les débits d'air comprimé injectés par les conduits de transfert partiel.

Les modes de réalisation ne se limitent à ceux exemplifiés sur la figure 2, d' autres dispositions équivalentes dans la culasse de conduits de transfert peuvent être envisagées, notamment en fonction du type de culasse ou de motorisation.

Il est ainsi possible de réaliser le système soit sur tous les conduits (il nécessite alors un système par conduit) et sur tous les cylindres (il nécessite alors un système par conduit et par cylindre) soit sur un nombre limité de conduits et/ou de cylindres.

Il est également possible de regrouper les conduits d'un même cylindre voire de plusieurs cylindres si l'encombrement de la culasse le permet ou de croiser les conduits entre des cylindres de façon à maximiser les débits court-circuités.

Dans tous les cas, les clapets peuvent être disposés en amont ou aval de la vanne, ou même être intégrés à la vanne.

Les conduits de transfert partiel peuvent être réalisés en même temps que la fonderie de la culasse, avec des emplacements réservés pour les équipements de vannage, ou par usinage des conduits après la réalisation de la culasse.

Bien entendu, un mode de réalisation mixte est aussi possible.

On restera dans le domaine de la présente invention si les conduits de transfert partiel intégrés à la culasse sont réalisés par des tubes disposés sur la culasse et raccordés, comme décrit plus haut, sur le conduit d'admission et le conduit d'échappement, dans la mesure où le dispositif est intégré entre les collecteurs d'admission et d'échappement, c'est-à-dire sans impact sur la boucle d'admission, et sur la boucle d'échappement conventionnelles.

## Revendications

1. Dispositif de contrôle de la quantité d'air introduit à l'admission d'un moteur à combustion interne suralimenté, ledit moteur comprenant deux sorties de gaz d'échappement (32, 36) reliées chacune à un collecteur d'échappement (30, 34) d'un groupe d'au moins un cylindre (12₁, 12₂, 12₃, 12₄), ledit dispositif comprenant un dispositif de suralimentation (38) comportant un turbocompresseur avec une turbine (40) à double entrée (46, 48) connectée auxdites sorties de gaz d'échappement ainsi qu'un compresseur (44) d'air extérieur, et au moins un conduit de transfert partiel (100, 102; 110, 112) de l'air comprimé du compresseur vers les entrées de la turbine, **caractérisé en ce que** le conduit de transfert partiel (100, 102; 110, 112) est aménagé dans la culasse du moteur entre une admission et un échappement relié aux entrées de la turbine et comporte des moyens de vannage (74, 76) contrôlant la circulation de l'air comprimé transféré.

2. Dispositif selon la revendication 1, **caractérisé en ce que** le conduit de transfert partiel comporte un clapet antiretour (80, 82).

3. Dispositif selon la revendication 1 ou 2, caractérisé en qu'il comporte au moins deux conduits de transfert partiel intégrés à la culasse et reliés à deux sorties d'échappement de ladite culasse en communication avec les deux entrées de la turbine.

4. Dispositif selon l'une des revendications précédentes, caractérisé en que ledit conduit de transfert partiel relie l'admission et l'échappement d'un même cylindre.

5. Dispositif selon l'une des revendications 1 à 3, caractérisé en que ledit conduit de transfert partiel relie l'admission d'un cylindre et l'échappement d'un autre cylindre.

6. Dispositif selon l'une des revendications précédentes, caractérisé en que les moyens de vannage comprennent des vannes proportionnelles (74, 76).

7. Dispositif selon la revendication 6, **caractérisé en ce qu'**il comporte des moyens de commande des vannes proportionnelles.

8. Procédé de contrôle de la quantité d'air comprimé à l'admission d'un moteur à combustion interne suralimenté, ledit moteur comprenant deux sorties de gaz d'échappement (32, 36) reliées chacune à un collecteur d'échappement (30, 34) d'un groupe d'au moins un cylindre (12₁, 12₂, 12₃, 12₄), ledit dispositif comprenant un dispositif de suralimentation (38) avec un turbocompresseur avec une turbine (40) à double entrée (46, 48) connectée auxdites sorties de gaz d'échappement ainsi qu'un compresseur (44) d'air extérieur, et au moins un conduit de transfert partiel (100, 102; 110, 112) de l'air comprimé du compresseur vers les entrées de la turbine, **caractérisé en ce qu'**il consiste à aménager ledit conduit (100, 102 ; 110, 112) dans la culasse du moteur entre une admission et un échappement relié aux entrées de la turbine et à introduire par ledit conduit une partie de l'air comprimé sortant du compresseur dans les entrées (46, 48) de gaz d'échappement de la turbine (40) en contrôlant la circulation de l'air comprimé transféré par des moyens de vannage (74, 76).

9. Procédé selon la revendication 8, **caractérisé en ce qu'**il consiste à aménager au moins deux conduits de transfert (100, 102 ; 110,112) dans la culasse et à contrôler la circulation de l'air comprimé dans chacun des conduits par les moyens de vannage (74, 76).

## Patentansprüche

1. Vorrichtung zum Regeln der Luftmenge, die in den Einlass einer aufgeladenen Brennkraftmaschine eingeleitet wird, wobei der Motor zwei Abgasauslässe (32, 36) umfasst, die jeweils mit einem Abgaskrümmer (30, 34) einer Gruppe von mindestens einem Zylinder (12₁, 12₂, 12₃, 12₄) verbunden sind, wobei die Vorrichtung eine Ladeeinrichtung (38) umfasst, umfassend einen Turboverdichter mit einer Turbine (40) mit Doppeleingang (46, 48), die an die Abgasauslässe angeschlossen ist, sowie einen Außenluftverdichter (44), und mindestens eine Leitung (100, 102; 110, 112) zum Teilübertragen der Druckluft aus dem Verdichter zu den Turbineneingängen, **dadurch gekennzeichnet, dass** die Teilübertragungsleitung (100, 102; 110, 112) in dem Zylinderkopf des Motors zwischen einem Einlass und einem Auslass angeordnet ist, der mit dem Turbineneingang verbunden ist und Drosseleinrichtungen (74, 76) umfasst, die die Zirkulation der übertragenen Druckluft regeln.

2. Vorrichtung nach Anspruch 1, **dadurch gekennzeichnet, dass** die die Teilübertragungsleitung ein Rückschlagventil (80, 82) umfasst.

3. Vorrichtung nach Anspruch 1 oder 2, **dadurch gekennzeichnet, dass** sie mindestens zwei Teilübertragungsleitungen umfasst, die in den Zylinderkopf integriert und an zwei Abgasauslässe des Zylinderkopfs in Verbindung mit den beiden Turbineneingängen angeschlossen sind.

4. Vorrichtung nach einem der vorhergehenden Ansprüche, **dadurch gekennzeichnet, dass** die Teilübertragungsleitung den Einlass und den Auslass desselben Zylinders verbindet.

5. Vorrichtung nach einem der Ansprüche 1 bis 3, **dadurch gekennzeichnet, dass** die Teilübertragungsleitung den Einlass eines Zylinders und den Auslass eines anderen Zylinders verbindet.

6. Vorrichtung nach einem der vorhergehenden Ansprüche, **dadurch gekennzeichnet, dass** die Drosseleinrichtungen Proportionalventile (74, 76) umfassen.

7. Vorrichtung nach Anspruch 6, **dadurch gekennzeichnet, dass** sie Einrichtungen zum Regeln der Proportionalventile umfasst.

8. Verfahren zum Regeln der Druckluftmenge, die in den Einlass einer aufgeladenen Brennkraftmaschine eingeleitet wird, wobei der Motor zwei Abgasauslässe (32, 36) umfasst, die jeweils mit einem Abgaskrümmer (30, 34) einer Gruppe von mindestens einem Zylinder (12₁, 12₂, 12₃, 12₄) verbunden sind, wobei die Vorrichtung eine Ladeeinrichtung (38) mit einem Turboverdichter mit einer Turbine (40) mit Doppeleingang (46, 48), die an die Abgasauslässe angeschlossen ist, sowie einen Außenluftverdichter (44), und mindestens eine Leitung (100, 102 ; 110, 112) zum teilweisen Übertragen der Druckluft aus dem Verdichter zu den Turbineneingängen umfasst, **dadurch gekennzeichnet, dass** es darin besteht, die Leitung (100, 102; 110, 112) in dem Zylinderkopf zwischen einem Einlass und einem Auslass, der an den Turbineneingang angeschlossen ist, anzuordnen und über die Leitung einen Teil der Druckluft, die aus dem Verdichter austritt, in die Abgaseinlässe (46, 48) der Turbine (40) einzuführen, indem die Zirkulation der durch die Drosseleinrichtungen (74, 76) übertragenen Druckluft geregelt wird.

9. Verfahren nach Anspruch 8, **dadurch gekennzeichnet, dass** es darin besteht, mindestens zwei Übertragungsleitungen (100, 102; 110, 112) im Zylinderkopf anzuordnen und die Zirkulation der Druckluft in jeder der Leitungen durch die Drosseleinrichtungen (74, 76) zu regeln.

## Claims

1. A device for controlling the amount of air fed to the intake of a turbocharged internal-combustion engine, said engine comprising two exhaust gas outlets (32, 36) connected each to an exhaust manifold (30, 34) of a group of at least one cylinder (12₁, 12₂, 12₃, 12₄), said device comprising a turbocharging device (38) including a turbocharger with a dual-inlet (46, 48) turbine (40) connected to said exhaust gas outlets, as well as an outside air compressor (44), and at least one duct (100, 102; 110, 112) for partial transfer of the compressed air from the compressor to the turbine inlets, **characterized in that** partial transfer duct (100, 102; 110, 112) is provided in the cylinder head of the engine, between an intake and an exhaust connected to the turbine inlets, and **in that** it comprises throttling means (74, 76) controlling the circulation of the transferred compressed air.

2. A device as claimed in claim 1, **characterized in that** the partial transfer duct comprises a non-return valve (80, 82).

3. A device as claimed in claim 1 or 2, **characterized in that** it comprises at least two partial transfer ducts integrated in the cylinder head and connected to two exhaust outlets of said cylinder head communicating with the two turbine inlets.

4. A device as claimed in any one of the previous claims, **characterized in that** said partial transfer duct connects the intake and the exhaust of a single cylinder.

5. A device as claimed in any one of claims 1 to 3, **characterized in that** said partial transfer duct connects the intake of a cylinder and the exhaust of another cylinder.

6. A device as claimed in any one of the previous claims, **characterized in that** the throttling means comprise proportional valves (74, 76).

7. A device as claimed in claim 6, **characterized in that** it comprises means for controlling the proportional valves.

8. A method for controlling the amount of compressed air fed to the intake of a turbocharged internal-combustion engine, said engine comprising two exhaust gas outlets (32, 36) connected each to an exhaust manifold (30, 34) of a group of at least one cylinder (12₁, 12₂, 12₃, 12₄), said device comprising a turbocharging device (38) including a turbocharger with a dual-inlet (46, 48) turbine (40) connected to said exhaust gas outlets, as well as an outside air compressor (44), and at least one duct (100, 102; 110, 112) for partial transfer of the compressed air from the compressor to the turbine inlets, **characterized in that** it consists in arranging said duct (100, 102; 110, 112) in the cylinder head of the engine between an intake and an exhaust connected to the turbine inlets and in feeding through said duct part of the compressed air leaving the compressor into exhaust gas inlets (46, 48) of turbine (40) while controlling the circulation of the transferred compressed air using throttling means (74, 76).

9. A method as claimed in claim 8, **characterized in that** it consists in providing at least two transfer ducts (100, 102; 110, 112) in the cylinder head and in controlling the compressed air circulation in each duct using throttling means (74, 76).
